# EUROPÄISCHE PATENTANMELDUNG

(11) **EP 1 508 810 A1**
(43) Veröffentlichungstag der Anmeldung: **23.02.2005**
(21) Anmeldenummer: 04017842.8
(22) Anmeldetag: 28.07.2004
(51) Int. Cl.: G01P 3/481, H02K 29/10, H02P 6/16

(54) **Steuerschaltung für einen geschalteten Reluktanzmotor**

(30) Priorität: 22.08.2003 DE 10339095
(71) Anmelder: Elektra GmbH, 96526 Schalkau (DE)
(72) Erfinder: Schwamberger, Frank, 98553 Schleusingen (DE); Horn, Stephan, 98746 Mellenbach-Glasbach (DE)
(74) Vertreter: Creutz, Dieter

(57) **Zusammenfassung**

Die Erfindung betrifft eine Steuerschaltung für einen hochtourig betriebenen geschalteten Reluktanzmotor, der sein Drehmoment aus der zyklischen Fortbewegung des ausladende Pole besitzenden Rotors gegenüber dem mit zuschaltbaren Polspulen ausgestatteten Stator bezieht, wobei dieser zur Steuerung des Reluktanzmotors eine zweispurige Rotorgeberscheibe enthält.

Diese zweispurige Rotorgeberscheibe ermöglicht durch Auswertung nur eines ihrer beiden Signale, des Synchronsensorsignales, in einem oberen Drehzahlbereich eine drehzahlabhängige Frühzündung der jeweils nachfolgenden Phase in Bezug auf dessen abfallende Flanke.

Mit der vorgeschlagenen Lösung ist eine Steuerung für einen Geschalteten Reluktanzmotor möglich, die auch Kommutierungsfrequenzen von einigen kHz zulässt und die eine zuverlässige Ausrichtung des Rotors auf Startposition beim Anlauf gewährleistet.

## Beschreibung

Die Erfindung betrifft eine Steuerschaltung für einen hochtourig betriebenen geschalteten Reluktanzmotor, der sein Drehmoment aus der zyklischen Fortbewegung des ausladende Pole besitzenden Rotors gegenüber dem mit zuschaltbaren Polspulen ausgestatteten Stator bezieht.

Es ist allgemein bekannt und üblich, die geschalteten Reluktanzmotoren mit unterschiedlicher Ansteuerung in einem unteren und einem oberen Drehzahlbereich zu betreiben.

Die Steuerung gewinnt in den meisten bekannt gewordenen Lösungsvarianten die aktuellen Situationsinformationen aus einem geeigneten Rotorlagegeber und einem zusätzlich gewonnenen oder abgeleiteten Drehzahlsignal und wechselt bei Passieren der Bereichsschwelle entsprechend den Bestromungsmodus.

Im unteren Drehzahlbereich wird in üblicher Weise das Zu- und Abschalten der aufeinander folgenden Phasen der Statorwicklung durch ein Puls-Weiten-Modulations-Signal (PWM-Signal) mit einem konstanten Tastverhältnis bewirkt.
Ab einer systemspezifischen Schwellenwert- Drehzahl wird regelmäßig in den anderen Bestromungsmodus übergegangen, bei dem die Stromimpulslage und - dauer angepasst getaktet wird.

Diesen Bestromungsmodus der Motorsteuerung im oberen Drehzahlbereich bis zu sehr hohen Drehzahlen zu lösen gibt es unterschiedliche Vorschläge.

So wird in der DE 40 29 335 vorgeschlagen, das für den niedrigen Drehzahlbereich angewendete Impulsfolgemuster dahingehend abzuwandeln, daß in deren zyklischer Reihenfolge bestimmte Stromimpulse ausgelassen werden, d.h. daß die entsprechenden Wicklungen an dieser Rotorposition nicht mit Strom gespeist werden. Damit steht für jeden verbleibenden Stromimpuls ein größerer Drehwinkelabschnitt des Rotors zur Verfügung ohne daß es zu einer Impulsüberlappung und zu Bremsmomenterscheinungen kommt.
Zusätzlich verlängert man die Impulsdauer durch Vorverlegung ihres Beginns jedoch unter Beibehaltung ihres Abschaltpunktes.
Die aktuellen Situationsinformationen gewinnt man wie vorstehend bereits beschrieben aus der Verwendung eines Rotorlagegebers und abgeleiteter Drehzahlwerte.

Die DE 100 35 540 bezeichnet die steuerungstechnische Lösung für den oberen Drehzahlbereich als Stromhysterese-Regelverfahren. Anders als beim normalen Pulsweiten-Modulationsverfahren mit seinem wechselnden Anlegen positiver und negativer Impulse mit entsprechendem Taktverhältnis zur Einstellung der gewünschten Stromhöhe wird beim Stromhysterese-Regelverfahren ein Strom definierter Höhe eingeprägt, indem die positive Spannung so lange auf die Spule geschaltet wird, bis ein Maximalwert überschritten wird.
Danach erfolgt die Nachregelung durch abwechselndes Ein- und Ausschalten der Spannung.

Eine Arbeit von *Björn Witt* an der FH Bochum zu einem Reluktanzmotorprüfstand verweist auf eine Steuerung mit punktweise hinterlegter Bestromungskennlinie.

Jede Variante eines Bestromungsmodus ist grundsätzlich darauf angewiesen, die momentane Rotorposition in Bezug auf die zyklisch und rotatorisch zu passierenden Statorpole zu erfassen und auszuwerten und dies nicht in einem statischen Zustand sondern in einem dynamischen Vorgang.

Signalgewinnung und Signalverarbeitung sind damit wichtige Funktionen in der Steuerung eines geschalteten Reluktanzmotors.

Die Erfassung der momentanen Rotorposition dient der Gewinnung der Ein- und Ausschaltbefehle zum zyklischen Bestromen der am Statorumfang angeordneten Wicklungsphasen. Da Stator und Rotor einen nach Polwinkelteilung und Polgeometrie in der Regel symmetrischen Aufbau haben kann man die Rotorposition an einer beliebigen Stelle des Umfangs gewinnen, die Aussage hat Gültigkeit für alle anderen Stellungen am Umfang für jede momentane Paarungslage der Stator-und Rotorpole.

Die Abtastzone eines Sensors wird von dem rotierenden Rotor durchlaufen, wobei sich zyklisch aus der Folge von Polbereichen und Lücken funktionsspezifische Ja-Nein-Signale des Sensors ergeben. Berührungslos arbeitende Sensoren wie Lichtschranken und Hallsensoren haben sich hierzu eingeführt.

Anfangs hat man die Direktabtastung der Rotorstirnseite favorisiert mit der Begründung, so die originären Stellungswerte zu erfassen und etwaige Montage-Versatzfehler von Geberscheiben auszuschließen.

Sehr bald zeigte sich aber, dass die Rotorstirnseite nicht die schaltungstechnisch wirklich relevanten Stellungen erfasst, um die funktionsgerecht optimierten Zu- und Abschaltungen der Phasen abzuleiten.
Deshalb wurden Geberscheiben eingeführt, die an der Stirnseite des Rotors angeordnet sind und auf seiner Welle mit ihm umlaufen, wie in **UK-Pat. GB 2 266 196 A** gezeigt.

Diese Geberscheiben lassen sich mit Abtastmustern versehen, die die Ja- Nein- Signale des jeweiligen Sensortyps auslösen, meist Löcher oder Aussparungen im Wechsel mit optisch oder magnetisch rückwirkenden Sektoren.

Diese Abtastmuster auf Kreisbahnen mit ihren sensorauslösenden Grenzkanten kann man nun abweichend von der Rotorgeometrie, jedoch in funktionsgerechter Relation zu ihr und der Bestromungsfolge ausführen.

Anfangs hat man mehrere konzentrische Bahnen benutzt, nach Anzahl zum Beispiel so viele wie es Wicklungsphasen gab. Der Sensoraufwand war entsprechend hoch und dennoch hatte man nur eine Diskriminante und eigentlich keinen kreisumfangs-zyklischen Kontrolltakt.

Schon für den Anlauf des Motors mit Rotorausrichtung und Sicherung der beabsichtigten Drehrichtung stieß man rasch an Grenzen und musste umständliche Kompensationsmaßnahmen treffen.
Das gilt auch für den Versuch, mit zusätzlichen Signalaufbereitungszweigen gänzlich auf Geberscheiben zu verzichten, indem Spannungs-Nulldurchgänge als Signal einer zyklischen Abfrageschaltung gewonnen werden, wie sie **DE 40 25 350 A1** vorschlägt.

Sämtliche vorstehend zitierten Patentschriften beschreiben lediglich Lösungen im Drehzahlbereich von Zehntausend Umdrehungen pro Minute.

Wird aber beispielsweise ein geschalteter Reluktanzmotor in der häufig ausgeführten Polzahl-Kombination 6 / 4 für Stator / Rotor mit bis zu 30 000 min⁻¹ betrieben, dann wird jeder der Rotorpole während einer Umdrehung an den sechs Statorpolen einer ebensolchen Anzahl von Kommutierung genannten Umsteuerungen bzw. Umordnungen ausgesetzt, womit sich eine Kommutierungsfrequenz von 3 kHz ergibt.

Der angepasste Bestromungsmodus im höheren Drehzahlbereich erfordert dann eine sog. Frühzündung durch Zündwinkelverschiebung.

Die bisher vorgeschlagenen Lösungen sehen hierfür nur statische Festbeträge vor, eine fließende Zündwinkelverschiebung ist nicht möglich.

Ein weiterer Nachteil des vorgefundenen Standes der Technik ist, dass das Ausrichten des Rotors beim Anlauf unbefriedigend oder sehr aufwändig gelöst wird.

Ein zuverlässiges und präzises Ausrichten ist Voraussetzung für einen sicheren Anlauf. Dabei muss auch die Anlaufenergie groß genug sein, um systembedingte mechanische Reibungen und Masseträgheiten zu überwinden. Ist diese Anlaufenergie wiederum zu groß, so ergibt sich eine Schwingungsanregung für den Rotor und dieser nimmt nicht die definierte Rotorposition ein. Auch führt eine Schwingbewegung des Rotors nach dem Abschalten der Ausrichtphase zu einer weiteren undefinierten Rotorbewegung. Der Rotor befindet sich also dann nicht sicher in der definierten Startposition.

Einseitige Chopperung während des Ausrichtens kann zudem die Ströme so anwachsen lassen, dass es zur Zerstörung von Leistungsbauelementen kommt.

Dies erfordert unter den oben erläuterten Bedingungen der steuerungstechnischen Reaktionsfähigkeit eine besonders geeignete Bestromungslösung.

Unbefriedigend sind auch die vorgefundenen Ausführungen der Rotorlagegeber-Scheiben und ihrer Abtastspurmuster. Zu hohe Sensoranzahl und/oder fehlende Grundzyklus-Kontrolle bedürfen einer verbesserten Konzeption.

Aufgabe der Erfindung ist es daher, eine Steuerung für einen Geschalteten Reluktanzmotor zu entwickeln, die auch Kommutierungsfrequenzen von einigen kHz zulässt und die eine zuverlässige Ausrichtung des Rotors auf Startposition beim Anlauf gewährleistet.

Erfindungsgemäß wird eine Steuerschaltung für einen hochtourig betriebenen geschalteten Reluktanzmotor vorgeschlagen, wobei zur Steuerung des Reluktanzmotors dieser eine zweispurige Rotorgeberscheibe enthält.

Diese zweispurige Rotorgeberscheibe ermöglicht durch Auswertung nur eines ihrer beiden Signale, des Synchronsensorsignales, in einem oberen Drehzahlbereich eine drehzahlabhängige Frühzündung der jeweils nachfolgenden Phase in Bezug auf dessen abfallende Flanke.
Die Bestromungsdauer dieser Phase wird dabei durch einen Timer drehzahlgerecht begrenzt.

In der Ausricht- und Anlaufzeit des Motors erfolgt erfindungsgemäß die Phasenansteuerung mit möglichst klein gehaltenen PWM- Amplituden, die dann kontinuierlich breiter werden und nach dem Erreichen einer definierten Maximalbreite wieder kontinuierlich schmaler, bis mit dem Erreichen einer gleichfalls definierten Minimalbreite die Ausrichtung beendet ist.

Auf diese Weise kann bereits schon beim Anlauf ein großes Anlaufmoment erzeugt werden.

Ebenfalls in der Ausricht- und Anlaufzeit des Motors wird zum Schutz der Leistungsbauelemente vor Überschreitung eines zulässigen Maximalstromes sowohl der high- seitige wie auch der low- seitige MOSFET gleichzeitig gechoppert.

Zum besseren Verständnis soll die erfindungsgemäße Lösung der Steuerschaltung an einem Beispiel näher erläutert werden.

Als Beispiel für die erfindungsgemäße Lösung dient ein geschalteter Reluktanzmotor in der Polzahl-Konfiguration 6 / 4 für Stator / Rotor und in 3-phasiger Wicklungsausführung. Mithin eine sehr häufig verwendete und in der bisherigen Patentliteratur auch so behandelte Version.

Der Motor ist für eine Nennleistung von 300 W und eine max. Drehzahl von 30 000 min⁻¹ ausgelegt.

In dieser Wicklungsausführung ist er für Betrieb in beiden möglichen Drehrichtungen geeignet, soll aber im speziellen Falle in nur einer bestimmten Drehrichtung verwendet werden.

Die Steuerung verwendet als zentrales Modul einen Microcontroller und als Positionsgeber einen zweispurigen , durch Hallsensoren abgefragten Rotorlagegeber.

Beim Einschalten des Motors wird sofort mittels einer Ausrichtung die Initiallage des Rotors definiert, um seinen Anlauf in die vorgesehene Drehrichtung bewirken zu können. Dazu wird zunächst eine der drei Phasen für eine bestimmte Zeit geschaltet. Das erfolgt in dem für den unteren Drehzahlbereich üblichen PWM- Verfahren, jedoch erfindungsgemäß in solcher Weise, dass die Schwingungsamplitude des Rotors klein gehalten werden kann und dennoch ein großes Anlaufmoment erzeugt wird. Dazu wird die Phase zunächst mit schmalen Impulsen angesteuert, die dann kontinuierlich breiter werden.
Nach dem Erreichen einer definierten maximalen Impulsbreite werden die Impulse wieder kontinuierlich schmaler. Der Ausrichtvorgang ist beendet, wenn die Impulse eine definierte Minimalbreite haben.

Nach dem Ausrichten erfolgt das Anlaufen des Motors. Dabei wird zunächst die der Ausrichtphase folgende Phase der Wicklung angesteuert. In Abhängigkeit des Phasensensors werden die Phasen zyklisch ein- und ausgeschaltet. Die Phasen werden mit einem konstanten Tastverhältnis geschaltet. Die Beschleunigung des Motors ergibt sich aus dem Tastverhältnis des PWM- Signals.

Der zweispurige Rotorlagegeber erlaubt nicht nur erfindungsgemäß vorteilhaft die regelmäßige Kontrolle des Grundzyklus sondern auch das Erfassen der momentanen Motordrehzahl.

Ab einer Drehzahl von etwa 5000 pro min ist es nicht mehr ausreichend, die Phasen mit den Flanken des Taktsensors zu schalten. Es wird eine drehzahlabhängige Frühzündung erforderlich, was als Erkenntnis zum Stand der Technik gehört.

Die abfallende Flanke des Sensorsignals vom Synchronsensor kennzeichnet den Zündzeitpunkt der Phase 1 ohne Frühzündung. Bei einer Frühzündung wäre also der Zündzeitpunkt für die Phase 1 bereits überschritten. Es muss deshalb als nächstes Phase 2 angesteuert werden. Zur Ermittlung des Zündzeitpunktes der Phase 2 erfolgt eine Zeitmessung zwischen zwei aufeinanderfolgenden Synchronsensorsignalen. Diese Zeit bildet die Basis für die Berechnung der Zeitpunkte zum Ein- und Abschalten der Phasen in der Folge Phase 2,3 und 1. Weiterhin wird mit dieser Zeitnahme die Drehzahl ermittelt und daraus eine drehzahlabhängige Bestimmung des Zündzeitpunktes sowie für den Zeitpunkt des Abschaltens der Phase durchgeführt.

Das erfindungsgemäße Ausführungsbeispiel wird zur weiteren Verdeutlichung anhand der vorliegenden Zeichnungen nochmals näher erläutert.
**Fig. 1 :** zeigt das Blockschaltbild einer erfindungsgemäßen Steuerung.
**Fig. 2a** stellt die Variante der Ansteuerung mit zwei Sensoren dar.
   Dabei dient der Synchronsensor zur Kennzeichnung der Phase 1, das darauffolgende Signal des Taktsensors mit seiner abfallenden Flanke wird dann zur präzisen Berechnung des Zündzeitpunktes genutzt. Der vorhandene Phasenversatz zwischen den Signalen wird beispielsweise für eine Drehrichtungserkennung genutzt.

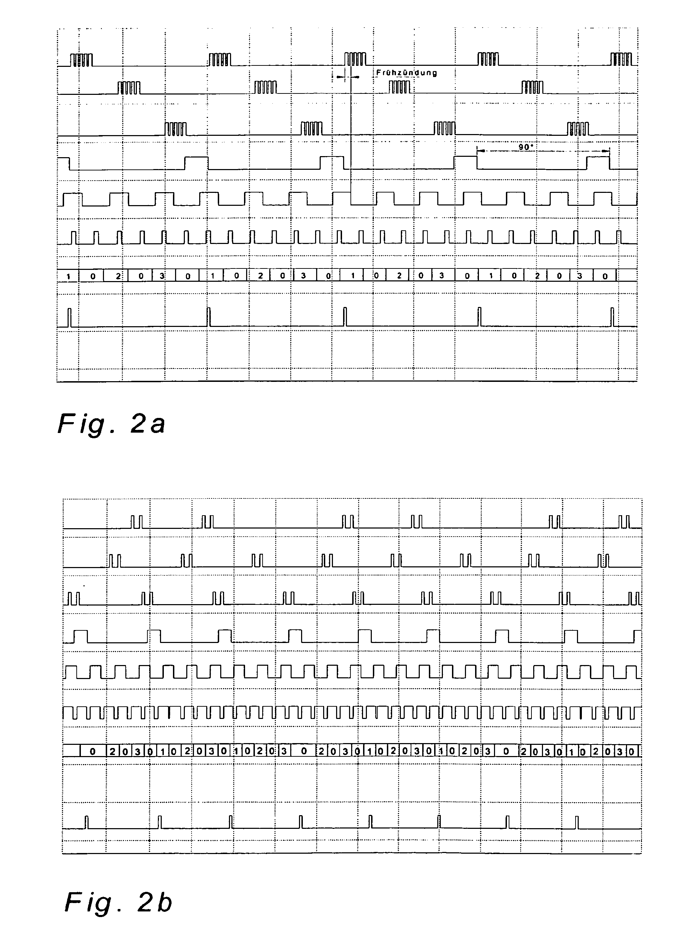

**Fig. 2b** zeigt die Variante der Ansteuerung mit nur einem Sensorsignal (Synchronsensor) im oberen Drehzahlbereich. Voraussetzung dafür ist, daß zwischen den beiden Sensorsignalen (abfallende Flanke) kein Phasenversatz besteht, um beim Ansteuern im unteren Drehzahlbereich über den Taktsensor und dem Ansteuern im oberen Drehzahlbereich über den Synchronsensor die gleiche Berechnungsbasis zu haben.

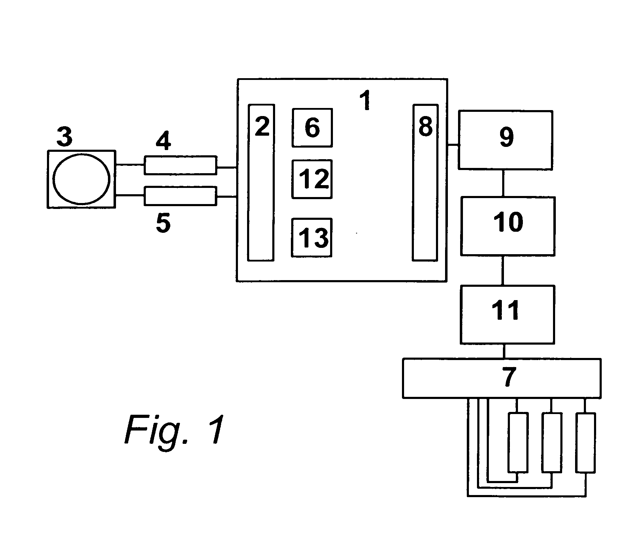

In der **Fig.** 1 ist der Microcontroller **(1)** die zentrale Baugruppe der Steuerung. Sein Eingangsport **(2)** ist mit dem Rotorlagegeber **(3)** verbunden. Von der Taktgeberspur **(4)** des Rotorlagegebers erhält er als Führungsgröße das Kommutierungsmuster in Form eines Taktimpulses und von der Synchronsensorspur **(5)** liegt der Synchronimpuls an. Pro Motorumdrehung sind entsprechend der Polzahlkonfiguration des Motors vier Synchronimpulse und 12 Taktimpulse vorhanden.

Zur Ermittlung der Drehzahl startet die abfallende Flanke eines Synchronimpulses einen ersten Timer **(6)** , der bei der nächsten abfallenden Flanke wieder gestoppt wird. Mit Hilfe des ausgelesenen Timerwertes kann die Motordrehzahl ermittelt werden.

Die Steuerung des Motors **(7)** erfolgt mittels einer asymmetrischen Halbbrücke des Controllers (1) , die in bekannter Weise insbesondere unter Verwendung von MOSFETs und Dioden aufgebaut ist, und die, in Auswertung erhaltener Signale, über das Ausgangsport **(8)** und zwischen diesem und dem Motor **(7)** vorhandene UND-Glieder **(9)** , einen Multiplexer **(10)** und einen Treiber **(11)**, die Kommutierung der Motorwicklungen vornimmt.

Die UND-Glieder **(9)** dienen der Überstrom- und Übertemperatur-Sicherung.

In der Ausrichtphase des Motorbetriebs - wie oben beschrieben - muss eine mögliche Zerstörung der Leistungsbauelemente durch Überschreitung des max. zulässigen Stromes abgewendet werden.
Eine solche Gefahr bestünde, wenn bei normalem Ausschalten des high- seitigen MOSFETs während des Chopperns der Strom über MOSFET und Diode kreist und kaum abgebaut wird. Beim nächsten Einschaltimpuls wird der Strom dann weiter erhöht usw.
Dabei ist der Stromfluss auch abhängig von der zufälligen Beginn-Ausrichtung der Stator- und Rotorpole zueinander, da dadurch bekanntlich der induktive Widerstand der Spule beeinflusst wird.
Erfindungsgemäß werden deshalb beim Ausrichten sowohl der high- seitige wie auch der lowseitige MOSFET gleichzeitig gechoppert. Dadurch wird bewirkt, dass nach dem Ausschalten des Chopperimpulses die Spule gegen Betriebsspannung umgepolt und der Strom schnell abgebaut wird. Beim nächsten Chopperimpuls ist der Strom dann so weit abgebaut, dass eine Überschreitung des zulässigen Maximalstromes durch die Addition des Reststromes vom vorherigen Chopperimpuls mit dem Strom des aktuellen Impulses nicht mehr auftritt.

Um diese Funktion umsetzen zu können ist dem Controller **(1)** der Multiplexerschaltkreis **(10)** nachgeordnet, der beim Ausrichten vom Controller so angesteuert wird, dass die ankommenden Choppersignale auf den low-seitigen Anschluß geführt werden.

Nach erfolgter Kommutierung werden die Kommutierungssignale dann generell auf den low-seitigen Anschluß geführt.
Für diese Aufgaben werden unterschiedliche Timer verwendet.
Timer 1 **(6)** wurde bereits als für die Drehzahlermittlung benutzt oben erwähnt.
Timer 2 **(12)** bestimmt die Zeitdauer der Frühzündung und das Schalten der Phasen,
Timer 3 **(13)** dient der Pulsweitenmodulations- Signalerzeugung
Timer 2 **(12)** wird mit dem aus der Drehzahl errechneten Wert geladen und gestartet.

Bei Erreichen des Timerendwertes wird ein Timer- Interrupt ausgelöst und die entsprechende Phase ein- bzw. ausgeschaltet.
Dieser Timer wird also nach jedem Synchronsensor-Impuls **( 4)** 3-mal ein- und 3-mal ausgeschaltet, um alle drei Phasen zu schalten.
Danach wird auf die nächste abfallende Flanke des Synchronsensors **(4)** auf der Synchrongeberspur des Rotorlagegebers **(3)** gewartet.

Die Phasen werden mit einem PWM-Signal angesteuert, welches mit dem Timer 3 (13) erzeugt wird. Das Tastverhältnis kann variabel gestaltet werden. Mit entsprechender Impulsbreite kann die Motorleistung beeinflußt werden. Eine Drehzahlregelung ist auch bei veränderlicher Last möglich.

In **Fig 2a** zeigen die drei oberen Schreibspuren die gegeneinander zeitlich versetzten Bestromungs-Impulsfolgesequenzen für die drei Motorphasen. Darunter sind die beiden Impulsspuren der Rotorlagegeber-Sensoren zu sehen, deren obere den 90°-Drehschritt des Rotors darstellt, den der Synchronsensor **(4)** überwacht, darunter die Impulsfolge des Taktsensors **(2),** gegenüber dessen abfallender Flanke wie eingezeichnet die Einschaltung der Phase in der obersten Spur als Frühzündung vorverlegt ist. Dies ist ein Momentanzustand bei einer Drehzahl von 5000 min-1

**Fig 2b** zeigt den gleichen Schrieb für eine Drehzahl von 15 000 min⁻¹.
Erkennbar ist, wie die Steuerung die Impulsfolge der höheren Drehzahl angepaßt hat.

Wie vorstehend beschrieben war es mit der Erfindung möglich, extrem hohe Drehzahlen bei einem geschalteten Reluktanzmotor zu realisieren.
Dabei beschränkt sich die Anwendbarkeit des Erfindungsgedankens nicht auf die im Beispiel verwendete Polzahl-Konfiguration.
Natürlich verfügt die Steuerung über alle sonstigen Vorausetzungen für einen sicheren und programmierbaren Betrieb des Motors. Diese sind jedoch nicht Gegenstand der Erfindung, sondern werden vorausgesetzt.

## Patentansprüche

1. Steuerschaltung für einen hochtourig betriebenen geschalteten Reluktanzmotor, **dadurch gekennzeichnet, dass** zur Steuerung der Reluktanzmotor mit einer zweispurigen Rotorgeberscheibe ausgestattet ist, die durch Auswertung nur eines ihrer beiden Signale, des Synchronsensorsignales, in einem oberen Drehzahlbereich eine drehzahlabhängige Frühzündung der jeweils nachfolgenden Phase in Bezug auf dessen abfallende Flanke ermöglicht, wobei die Bestromungsdauer dieser Phase durch einen Timer drehzahlgerecht begrenzt wird,
die Phasenansteuerung in der Ausricht- und Anlaufzeit des Motors mit möglichst klein gehaltenen PWM- Amplituden erfolgt, die dann kontinuierlich breiter werden und nach dem Erreichen einer definierten Maximalbreite wieder kontinuierlich schmaler, bis mit dem Erreichen einer gleichfalls definierten Minimalbreite die Ausrichtung beendet ist,
und der high- seitige wie auch der low- seitige MOSFET in der Ausricht- und Anlaufzeit des Motors gleichzeitig gechoppert werden.
